# EUROPÄISCHE PATENTSCHRIFT

(11) **EP 3 350 955 B1**
(45) Veröffentlichungstag und Bekanntmachung des Hinweises auf die Patenterteilung: **02.03.2022**
(21) Anmeldenummer: 16763516.8
(22) Anmeldetag: 12.09.2016
(51) Int. Cl.: H04L 9/08, H04L 9/32

(54) **PUF BASIERENDE ZUFALLSSIGNALGENERATOR UND VERFAHREN ZUM ERZEUGEN EINES ZUFALLSSIGNALS**
PUF-BASED RANDOM SIGNAL GENERATOR AND METHOD FOR GENERATING A RANDOM SIGNAL
GÉNÉRATEUR DE SIGNAUX ALÉATOIRES À BASE D'UNE FONCTION PUF ET PROCÉDÉ DE GÉNÉRATION D'UN SIGNAL ALÉATOIRE

(30) Priorität: 18.09.2015 DE 102015115802
(43) Veröffentlichungstag der Anmeldung: 25.07.2018
(73) Patentinhaber: Bundesdruckerei GmbH, 10969 Berlin (DE)
(72) Erfinder: KULIKOVSKA, Olga, 14165 Berlin (DE); FUMY, Walter, 91052 Erlangen (DE); HORVATH, Olaf, 10249 Berlin (DE)
(74) Vertreter: Patentship Patentanwaltsgesellschaft mbH
(86) Internationale Anmeldenummer: PCT/EP2016/071406
(87) Internationale Veröffentlichungsnummer: WO 2017/046022

(56) Entgegenhaltungen:
- Thomas Esbach ET AL: "A New Security Architecture for Smartcards Utilizing PUFs" In: "ISSE 2012 Securing Electronic Business Processes", 1. Januar 2012 (2012-01-01), Springer Fachmedien Wiesbaden, Wiesbaden, XP055325530, ISBN: 978-3-658-00333-3 Seiten 180-194, DOI: 10.1007/978-3-658-00333-3_18, Zusammenfassung Absatz [0003]
- Nxp: "PUF-Physical uncloneable functions : Protecting next-generation Smart Cards ICs with SRAM-based PUS", , 1. Oktober 2013 (2013-10-01), XP055313039, Gefunden im Internet: URL:www.icao.int [gefunden am 2016-10-21]
- Michal Varchola: "FPGA Based True Random Number Generators for Embedded Cryptographic Applications", , 1. Dezember 2008 (2008-12-01), XP055298209, Gefunden im Internet: URL:http://www.varchola.com/embedded/src/p df/minimovka.pdf [gefunden am 2016-08-29]
- HERDER CHARLES ET AL: "Physical Unclonable Functions and Applications: A Tutorial", PROCEEDINGS OF THE IEEE, IEEE. NEW YORK, US, Bd. 102, Nr. 8, 1. August 2014 (2014-08-01), Seiten 1126-1141, XP011553689, ISSN: 0018-9219, DOI: 10.1109/JPROC.2014.2320516 [gefunden am 2014-07-18]
- Ulrich Rührmair ET AL: "Security Based on Physical Unclonability and Disorder" In: "Introduction to Hardware Security and Trust", 1. Januar 2012 (2012-01-01), Springer New York, New York, NY, XP055158364, ISBN: 978-1-44-198080-9 Seiten 65-102, DOI: 10.1007/978-1-4419-8080-9_4, Absatz [0002] - Absatz [0004]
- Inyoung Kim ET AL: "From Statistics to Circuits: Foundations for Future Physical Unclonable Functions" In: "Information Security and Cryptography", 1 January 2010 (2010-01-01), Springer Verlag, DE, XP055715944, ISSN: 1619-7100 pages 55-78, DOI: 10.1007/978-3-642-14452-3_3,
- MERLI DOMINIK ET AL: "Side-Channel Analysis of PUFs and Fuzzy Extractors", 22 June 2011 (2011-06-22), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 33 - 47, XP047433067, ISBN: 978-3-642-17318-9

## Beschreibung

Die vorliegende Erfindung betrifft einen Zufallssignalgenerator und ein Verfahren zum Erzeugen eines Zufallssignals. Ferner betrifft die Erfindung ein Verfahren zum Erzeugen eines kryptographischen Schlüssels.

Bei sicherheitsrelevanten Anwendungen, beispielsweise bei asymmetrischen Authentifikationsverfahren, werden kryptographische Schlüssel oftmals aus einer Folge von Zufallszahlen, die ein Zufallssignal darstellen, gewonnen. Dabei ist es wünschenswert, insbesondere bei mobilen Anwendungen, beispielsweise bei Chipkarten, einen möglichst geringen Hardwareaufwand zu betreiben. Bekannte Maßnahmen, um Zufallszahlen zu erzeugen, sind beispielsweise Pseudozufallszahlengeneratoren, analoge Zufallsquellen, Ringoszillatoren und deren Abwandlungen.

Bei Pseudozufallszahlengeneratoren werden sogenannte Seeds verwendet, von denen ausgehend deterministische Pseudozufallszahlen berechnet werden. Zur Erzeugung des Seeds wird in der Regel ein physikalischer Zufallsgenerator verwendet. Als analoge Zufallsquellen werden Rauschquellen, wie z.B. das Rauschen von Zenerdioden, verstärkt und digitalisiert. Dabei ist die Verbindung von digitaler mit analoger Schaltungstechnik meist nur aufwändig zu verwirklichen.

Bei Ringoszillatoren, die aus einer ungeraden Anzahl von hintereinander geschalteten Invertern aufgebaut sind, ergeben sich zufällige Jitter aus schwankenden Durchlaufzeiten der Signale durch die Inverter. Diese Jitter, also eine unregelmäßige zeitliche Schwankung in Zustandsänderungen der durch die Inverter geschickten Signale, können bei mehrfachen Durchläufen durch die Ringoszillatorschaltung akkumuliert werden, so dass letztlich ein zufälliges analoges Signal entsteht. Nachteilig bei Ringoszillatoren ist häufig die notwendige lange Zeit vom Start der Schwingung bis ein brauchbar zufälliges Signal aufgrund der Jitter-Akkumulierung entsteht. Daher ergeben sich meist niedrige nicht akzeptable Datenerzeugungsraten bei Ringoszillatoren. Ferner ist möglich, dass die sich addierenden Jitter-Beiträge sich auch selbst wieder aufheben, so dass im Mittel zufällige kurze Gatterlaufzeiten durch zufällige längere Gatterlaufzeiten kompensiert werden.

Bei digitalen Schaltungen hängt der Stromverbrauch im Wesentlichen von der Anzahl der Umschaltvorgänge pro Zeit ab. Bei entsprechenden digitalen Schwingschaltungen muss dies ständig stattfinden, so dass ein eher ungünstiger Energieverbrauch bei auf Ringoszillatoren basierenden Zufallszahlengeneratoren entsteht. Insbesondere bei mobilen Anwendungen ist es wünschenswert, den Energieverbrauch bzw. die Stromaufnahme der hardwaremäßig implementierten Schaltungen gering zu halten. Dennoch soll ein statistisch guter physikalischer Zufall entstehen.

Es ist daher die Aufgabe der vorliegenden Erfindung, ein effizientes und kostengünstiges Konzept zum Erzeugen von Zufallssignalen bzw. Zufallszahlen zu schaffen.

Diese Aufgabe wird durch die Merkmale der unabhängigen Ansprüche gelöst. Vorteilhafte Ausbildungsformen sind Gegenstand der abhängigen Patentansprüche, der Beschreibung sowie der Figuren.

Die Erfindung basiert auf der Erkenntnis, die obige Aufgabe durch die Verwendung einer Physikalisch Unklonbaren Funktion (PUF) lösen zu können. Bei herkömmlichen Anwendungen von Physikalisch Unklonbaren Funktionen wird bei einem rauschbehafteten Antwortsignal, das beim Beaufschlagen einer PUF mit einem definierten Stimulationssignal erzeugt wird, das Rauschen eliminiert, um ein Nutzsignal zu erhalten, mit dem sich beispielsweise die Integrität der PUF verifizieren lässt. Stattdessen schlägt die Erfindung einen anderen Weg vor, nämlich aus dem rauschbehafteten Antwortsignal das mit der PUF in einem eindeutigen Zusammenhang stehende Nutzsignal zu eliminieren, um somit ein Rauschsignal zu erhalten, das insbesondere zum Erzeugen von kryptographischen Schlüsseln genutzt werden kann.

Gemäß einem ersten Aspekt betrifft die Erfindung ein Verfahren zum Erzeugen eines Zufallssignals unter Verwendung einer Physikalisch Unklonbaren Funktion, welche ausgebildet ist, ansprechend auf ein bestimmtes Stimulationssignal mit einem Antwortsignal zu reagieren, das ein Nutzsignal umfasst, mit den Schritten: Beaufschlagen der Physikalisch Unklonbaren Funktion mit dem bestimmten Stimulationssignal, Detektieren des Antwortsignals von der Physikalisch Unklonbaren Funktion, wobei das Antwortsignal ein Rauschsignal sowie das Nutzsignal umfasst, Extrahieren des Rauschsignals aus dem Antwortsignal und Erzeugen des Zufallssignals auf der Basis des Rauschsignals.

Gemäß einer Ausführungsform umfasst das Extrahieren des Rauschsignals aus dem Antwortsignal das Bestimmen des Nutzsignals.

Das bestimmte Nutzsignal kann in dem Antwortsignal unterdrückt oder aus dem Nutzsignal herausgefiltert werden, um das Rauschsignal zu extrahieren.

Gemäß einer Ausführungsform kann das Verfahren ferner das Authentifizieren des Zufallssignals durch das extrahierte Nutzsignal umfassen.

Das Verfahren kann ferner eine Fehlerkorrektur des Nutzsignals und/oder des Antwortsignals umfassen.

Gemäß einer Ausführungsform wird das Zufallssignal als Eingangssignal einem Zufallszahlengenerator zugeführt, um den kryptographischen Schlüssel zu erzeugen. Ein Ausgangssignal des Zufallszahlengenerators liefert eine Zufallszahl, welche den kryptographischen Schlüssel repräsentiert.

Gemäß einer Ausführungsform wird das Zufallssignal durch eine Filterung oder eine Glättung oder eine Transformation oder eine De-Korrelation des Rauschsignals erzeugt, um Schwankungen eines Leistungsdichtespektrums des Rauschsignals zu reduzieren oder Abtastwerte des Rauschsignals zu de-korrelieren.

Das Rauschsignal kann ein digitales Rauschsignal sein, welches das Zufallssignal darstellt.

Gemäß einer Ausführungsform kann das Rauschsignal in dem Schritt des Erzeugens des Zufallssignals binarisiert werden, um ein binäres Rauschsignal zu erhalten, welches das Zufallssignal repräsentiert oder welches einem Zufallszahlengenerator als Eingangssignal zugeführt wird.

Das Zufallssignal kann eine Zufallszahl oder eine Folge von Zufallszahlen repräsentieren.

Gemäß einer Ausführungsform kann das Rauschsignal ein analoges Rauschsignal sein, wobei das analoge Rauschsignal in dem Schritt des Erzeugens des Zufallssignals quantisiert wird, um ein digitales Rauschsignal zu erhalten, wobei das digitale Rauschsignal das Zufallssignal ist.

Gemäß einem zweiten Aspekt betrifft die Erfindung ein Verfahren zum Erzeugen eines kryptographischen Schlüssels unter Verwendung einer Physikalisch Unklonbaren Funktion. Dabei umfasst das Verfahren das Erzeugen des Zufallssignals durch eines der Verfahren gemäß dem ersten Aspekt der Erfindung und das Erzeugen des kryptographischen Schlüssels auf der Basis des Zufallssignals.

Gemäß einem dritten Aspekt betrifft die Erfindung einen Zufallssignalgenerator zum Erzeugen eines Zufallssignals unter Verwendung einer Physikalisch Unklonbaren Funktion, welche ausgebildet ist, ansprechend auf ein bestimmtes Stimulationssignal mit einem Antwortsignal zu reagieren, das ein Nutzsignal umfasst. Dabei umfasst der Zufallssignalgenerator einen Sender zum Beaufschlagen der Physikalisch Unklonbaren Funktion mit dem bestimmten Stimulationssignal, einen Detektor zum Detektieren des Antwortsignals von der Physikalisch Unklonbaren Funktion, wobei das Antwortsignal ein Rauschsignal sowie das Nutzsignal umfasst, und einen Prozessor, welcher ausgebildet ist, das Rauschsignal aus dem Antwortsignal zu extrahieren und das Zufallssignal auf der Basis des Rauschsignals zu erzeugen.

Die Erfindung kann in Hardware und/oder Software realisiert werden.

### Stand der Technik

D1: XP011553689 Physical Unclonable Functions and Applications: A Tutorial 2014-08-01 Herder Charles; Yu Meng-Day; Koushanfar Farinaz; Devadas Srinivas
D2: XP055325530 A New Security Architecture for Smartcards Utilizing PUFs 2012-01-01 Thomas Esbach; Walter Fumy; Olga Kulikovska; Dominik Merli; Dieter Schuster; Frederic Stumpf
D3: XP055313039 PUF-Physical uncloneable functions : Protecting next-generation Smart Cards ICs with SRAM-based PUS 2013-10-01 NXP
D4: XP055298209 FPGA Based True Random Number Generators for Embedded Cryptographic Applications 2008-12-01 Michal Varchola
Von der Anmelder ins Schriftliches Verfahren Zitiert: Anti-counterfeiting with Hardware Intrinsic Security Vincent van der Leest and Pim Tuyls

Weitere Ausführungsbeispiele werden Bezug nehmend auf die beiliegenden Figuren näher erläutert. Es zeigen:
- Fig. 1: ein schematisches Diagramm eines Verfahrens zum Erzeugen eines Zufallssignals unter Verwendung einer Physikalisch Unklonbaren Funktion gemäß einer Ausführungsform;
- Fig. 2: ein schematisches Diagramm eines Verfahrens zum Erzeugen eines kryptographischen Schlüssels unter Verwendung einer Physikalisch Unklonbaren Funktion gemäß einer Ausführungsform; und
- Fig. 3: ein schematisches Diagramm eines Zufallssignalgenerators zum Erzeugen eines Zufallssignals unter Verwendung einer Physikalisch Unklonbaren Funktion gemäß einer Ausführungsform.

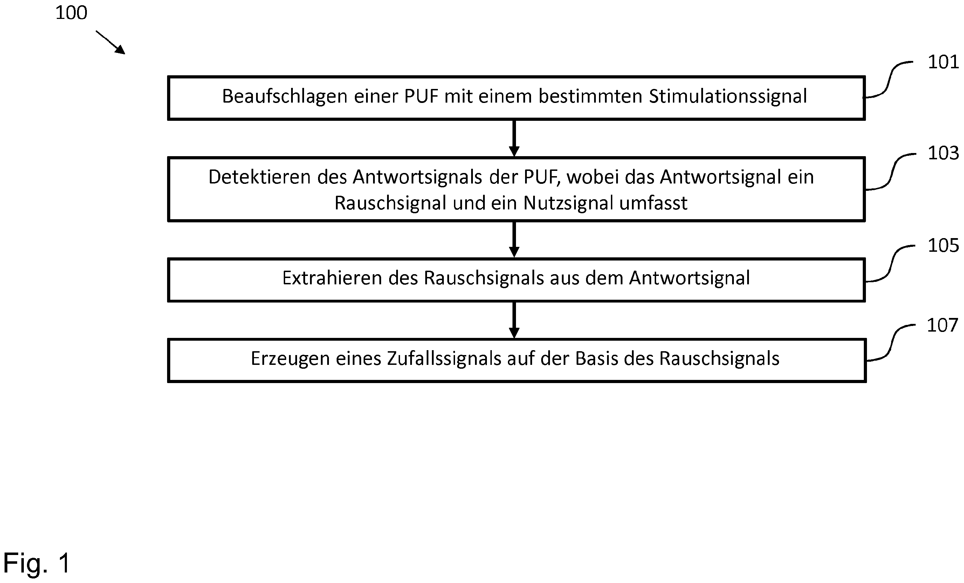

Figur 1 zeigt ein schematisches Diagramm eines Verfahrens 100 zum Erzeugen eines Zufallssignals unter Verwendung einer Physikalisch Unklonbaren Funktion (PUF) gemäß einer Ausführungsform.

Das Verfahren 100 umfasst das Beaufschlagen 101 der PUF mit dem bestimmten Stimulationssignal, das Detektieren 103 des Antwortsignals von der PUF, wobei das Antwortsignal ein Rauschsignal sowie das Nutzsignal umfasst, das Extrahieren 105 des Rauschsignals aus dem Antwortsignal und das Erzeugen 107 des Zufallssignals auf der Basis des Rauschsignals. Das Zufallssignal kann eine Zufallszahl oder eine Folge von Zufallszahlen repräsentieren.

Gemäß einer Ausführungsform kann der Schritt 105 des Extrahierens des Rauschsignals aus dem Antwortsignal das Bestimmen des Nutzsignals umfassen.

Das bestimmte Nutzsignal kann in dem Antwortsignal unterdrückt oder aus dem Antwortsignal herausgefiltert werden, um das Rauschsignal zu extrahieren.

Gemäß einer Ausführungsform kann das Verfahren 100 ferner den Schritt des Extrahierens des Nutzsignals aus dem Antwortsignal umfassen.

Gemäß einer Ausführungsform kann das Verfahren 100 ferner das Authentifizieren des Zufallssignals durch das extrahierte Nutzsignal umfassen. Das extrahierte Nutzsignal kann mit einem einer PUF eindeutig zugeordneten Referenzsignal verglichen werden. Bei hinreichender Übereinstimmung des extrahierten Nutzsignals mit dem Referenzsignal kann davon ausgegangen werden, dass es sich bei der PUF, aus deren Antwortsignal das Nutzsignal extrahiert worden ist, um dieselbe PUF handelt, auf deren Basis das Referenzsignal bestimmt worden ist. Somit lässt sich die Integrität der PUF und des mittels der PUF erzeugten Zufallssignals verifizieren.

Das Verfahren 100 kann ferner eine Fehlerkorrektur des Nutzsignals umfassen.

Gemäß einer Ausführungsform kann das Zufallssignal durch eine Filterung oder eine Transformation oder eine De-Korrelation des Rauschsignals erzeugt werden, um Schwankungen eines Leistungsdichtespektrums des Rauschsignals zu reduzieren oder Abtastwerte des Rauschsignals zu de-korrelieren.

Je nachdem was für eine PUF zur Erzeugung eines Zufallssignals mit dem Verfahren 100 verwendet wird, kann es sich bei dem Rauschsignal um ein analoges oder ein digitales Rauschsignal handeln.

Im Fall eines analogen Rauschsignals kann das Verfahren 100 ferner einen Schritt umfassen, bei dem das analoge Rauschsignal quantisiert wird, beispielsweise im Rahmen von Schritt 107, um ein digitales Rauschsignal zu erhalten, wobei das digitale Rauschsignal das Zufallssignal ist.

Gemäß einer Ausführungsform kann im Fall eines digitalen Rauschsignals dieses direkt als Zufallssignal verwendet werden.

Insbesondere für Anwendungen, bei denen Zufallszahlen in Form von Zufallsbinärfolgen eingesetzt werden, kann das Rauschsignal in dem Schritt 107 des Erzeugens des Zufallssignals binarisiert werden, um ein binäres Rauschsignal zu erhalten, welches das Zufallssignal repräsentiert.

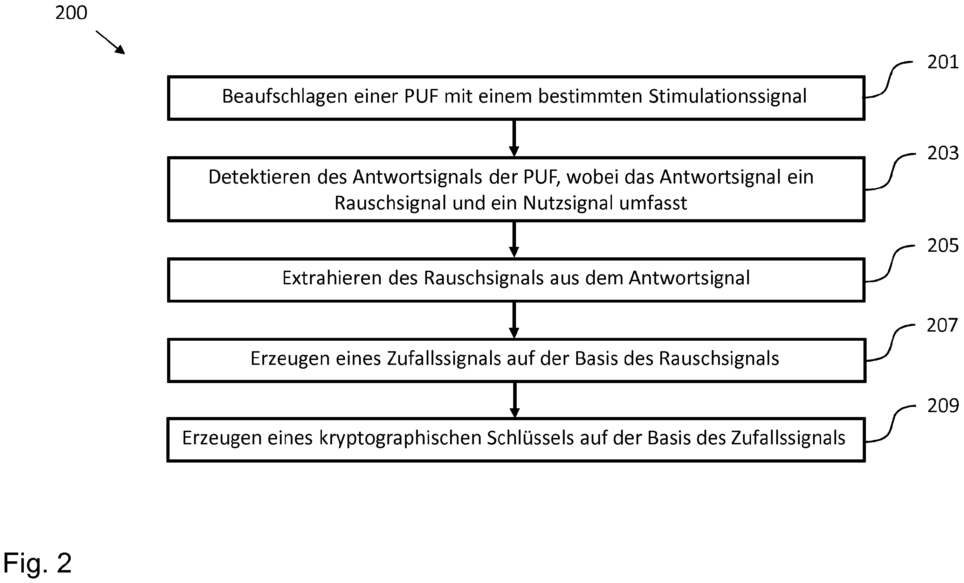

Figur 2 zeigt ein schematisches Diagramm eines Verfahrens 200 zum Erzeugen eines kryptographischen Schlüssels unter Verwendung einer PUF gemäß einer Ausführungsform.

Das Verfahren 200 umfasst das Beaufschlagen 201 der PUF mit dem bestimmten Stimulationssignal, das Detektieren 203 des Antwortsignals von der PUF, wobei das Antwortsignal ein Rauschsignal sowie das Nutzsignal umfasst, das Extrahieren 205 des Rauschsignals aus dem Antwortsignal, das Erzeugen 207 des Zufallssignals auf der Basis des Rauschsignals und das Erzeugen 209 eines kryptographischen Schlüssels auf der Basis des Zufallssignals. Beispielsweise kann aus dem Zufallssignal eine Bitfolge einer gewünschten Länge N abgeleitet werden, um diese als kryptographischen Schlüssel zu verwenden.

Wie der Fachmann dies erkennt, sind die Schritte 201 bis 207 des Verfahrens 200 identisch zu den vorstehend beschriebenen Schritten 101 bis 107 des Verfahrens 100. Weitere Ausführungsformen des Verfahrens 200 ergeben sich aus den vorstehend beschriebenen weiteren Ausführungsformen des Verfahrens 100.

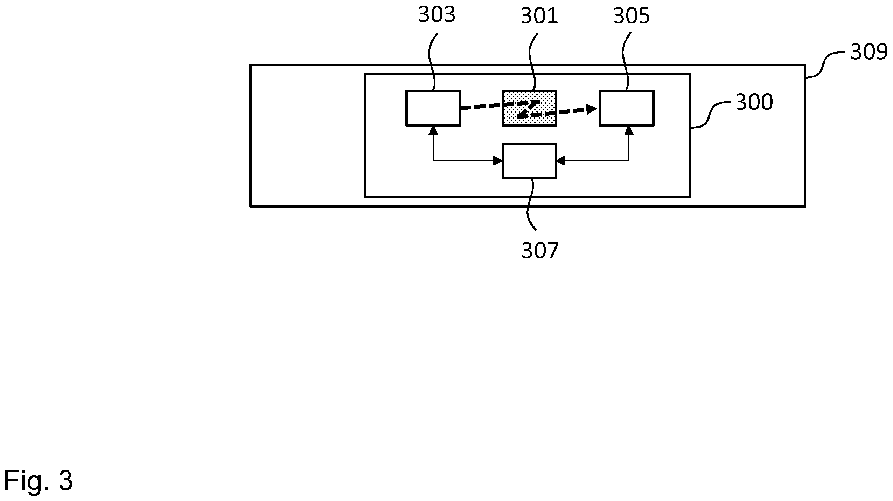

Figur 3 zeigt ein schematisches Diagramm eines Zufallssignalgenerators 300 zum Erzeugen eines Zufallssignals unter Verwendung einer PUF 301 gemäß einer Ausführungsform. Dabei ist die PUF 301 ausgebildet, ansprechend auf ein bestimmtes Stimulationssignal mit einem Antwortsignal zu reagieren, das ein Nutzsignal umfasst.

Der Zufallssignalgenerator 300 umfasst einen Sender 303 zum Beaufschlagen der PUF 301 mit dem bestimmten Stimulationssignal, einen Detektor 305 zum Detektieren des Antwortsignals von der PUF 301, wobei das Antwortsignal ein Rauschsignal sowie das Nutzsignal umfasst, und einen Prozessor 307, welcher ausgebildet ist, das Rauschsignal aus dem Antwortsignal zu extrahieren und das Zufallssignal auf der Basis des Rauschsignals zu erzeugen. Wie in Figur 3 schematisch dargestellt, kann die PUF 301 Bestandteil des Zufallssignalgenerators 300 sein.

Gemäß einer Ausführungsform kann der Zufallssignalgenerator 300 in einem Sicherheits- oder Wertdokument 309 eingebettet sein. Bei dem Sicherheits- oder Wertdokument 309 kann es sich beispielsweise um eine Chipkarte handeln. Dies ist beispielsweise insofern vorteilhaft, als in einigen Chipkarten PUFs bereits für andere Anwendungen zum Einsatz kommen und eine solche PUF zum erfindungsgemäßen Erzeugen eines Zufallssignals eingesetzt werden könnte. Bei Ausführungsformen, bei denen der Zufallssignalgenerator 300 Teil eines Sicherheits- oder Wertdokuments ist, kann die Funktion des Prozessors 307 vom Prozessor des Sicherheits- oder Wertdokuments übernommen werden.

Gemäß Ausführungsformen der Erfindung können elektronische oder nicht-elektronische, insbesondere optische PUF-Ausführungen verwendet werden. Dabei können elektronische Eigenschaften wie beispielsweise eine Schwellenspannung eines Transistors oder eine Verzögerung in einem Schaltelement ebenso wie nicht-elektronische Eigenschaften, beispielsweise optische Eigenschaften der PUF 301 oder magnetische Eigenschaften usw., vermessen werden. Das Nutzsignal ist in allen Fällen für die PUF 301 charakteristisch und spezifisch und nicht praktikabel reproduzierbar. Die PUF 301 kann auch als eine Delay-PUF, eine Arbiter-PUF, eine SRAM-PUF, eine Ring-Oscillator PUF, eine Bistable Ring PUF, eine Flip-Flop-PUF, eine Glitch PUF, eine Cellular Non-linear Network PUF oder eine Butterfly-PUF ausgebildet sein. So kann abhängig von den Randbedingungen eine geeignete PUF-Variante ausgewählt werden.

Gemäß einer Ausführungsform kann der Sender 303 ausgebildet sein, die PUF 301 mit einem Stimulationssignal in Form von elektromagnetischer Strahlung zu beaufschlagen.

Vorzugsweise ist die elektromagnetische Strahlung Licht im UV-, sichtbaren und/oder IR-Bereich.

Bei einer solchen Ausführungsform kann die PUF 301 beispielsweise durch herstellungsbedingte Materialinhomogenitäten gebildet werden. Diese Materialinhomogenitäten können beispielsweise durch Partikel, Pigmente, Strukturen oder Einschlüsse in fester, gasförmiger oder fester Form mit farbigen, transparenten, reflektierenden, absorbierenden, streuenden, diffraktiven, leitfähigen, dielektrischen, magnetischen, radioaktiven, lumineszierenden, fluoreszierenden, up-konvertierenden, elektrochromen, thermochromen, photochromen, elastomeren, piezoelektrischen, chemisch reaktiven Materialien definiert werden.

Gemäß einer Ausführungsform ist der Detektor 305 ein auf elektromagnetische Strahlung ansprechender Detektor. In diesem Falle wird das Antwortsignal durch elektromagnetische Strahlung gebildet. Der Detektor 305 kann beispielsweise ein auf CMOS-Technologie beruhender Detektor sein.

Die Erfindung wird durch den Gegenstand der unabhängigen Ansprüche definiert.

### BEZUGSZEICHENLISTE

- 100: Verfahren zum Erzeugen eines Zufallssignals
- 101: Beaufschlagen einer PUF mit einem Stimulationssignal
- 103: Detektieren eines Antwortsignals
- 105: Extrahieren eines Rauschsignals
- 107: Erzeugen des Zufallssignals

- 200: Verfahren zum Erzeugen eines kryptographischen Schlüssels
- 201: Beaufschlagen einer PUF mit einem Stimulationssignal
- 203: Detektieren eines Antwortsignals
- 205: Extrahieren eines Rauschsignals
- 207: Erzeugen eines Zufallssignals
- 209: Erzeugen des kryptographischen Schlüssels

- 300: Zufallssignalgenerator
- 301: Physikalisch Unklonbare Funktion (PUF)
- 303: Sender
- 305: Detektor
- 307: Prozessor
- 309: Sicherheits- oder Wertdokument

## Patentansprüche

1. Verfahren (200) zum Erzeugen eines kryptographischen Schlüssels unter Verwendung einer Physikalisch Unklonbaren Funktion, mit:
Erzeugen eines Zufallssignals unter Verwendung einer Physikalisch Unklonbaren Funktion, welche ausgebildet ist, ansprechend auf ein bestimmtes Stimulationssignal mit einem Antwortsignal zu reagieren, das ein Nutzsignal umfasst, wobei die Physikalisch Unklonbare Funktion durch herstellungsbedingte Materialinhomogenitäten gebildet ist und ausgebildet ist, bei Beaufschlagung mit einem Stimulationssignal in Form von elektromagnetischer Strahlung das Antwortsignal zu erzeugen, mit:
Beaufschlagen (101) der Physikalisch Unklonbaren Funktion mit dem bestimmten Stimulationssignal;
Detektieren (103) des Antwortsignals von der Physikalisch Unklonbaren Funktion, wobei das Antwortsignal ein Rauschsignal sowie das Nutzsignal umfasst;
Extrahieren (105) des Rauschsignals aus dem Antwortsignal;
Erzeugen (107) des Zufallssignals auf der Basis des Rauschsignals,
wobei das Zufallssignal durch eine Filterung oder eine Transformation oder eine De-Korrelation des Rauschsignals erzeugt wird, um Schwankungen eines Leistungsdichtespektrums des Rauschsignals zu reduzieren oder Abtastwerte des Rauschsignals zu de-korrelieren,
wobei das Extrahieren (105) des Rauschsignals aus dem Antwortsignal das Bestimmen des Nutzsignals umfasst,
wobei das bestimmte Nutzsignal in dem Antwortsignal unterdrückt oder aus dem Antwortsignal herausgefiltert wird, um das Rauschsignal zu extrahieren,
wobei das Verfahren (100) ferner eine Fehlerkorrektur in dem Nutzsignal umfasst,
wobei das Rauschsignal ein digitales Rauschsignal ist, welches das Zufallssignal darstellt; oder
wobei das Rauschsignal in dem Schritt (107) des Erzeugens des Zufallssignals binarisiert wird, um ein binäres Rauschsignal zu erhalten, welches das Zufallssignal repräsentiert; und
Erzeugen (209) des kryptographischen Schlüssels auf der Basis des Zufallssignals.

2. Verfahren (200) nach Anspruch 1, das ferner das Authentifizieren des Zufallssignals durch das extrahierte Nutzsignal umfasst.

3. Verfahren (200) nach einem der vorstehenden Ansprüche, wobei das Zufallssignal eine Zufallszahl oder eine Folge von Zufallszahlen repräsentiert.

4. Verfahren (200) nach einem der vorstehenden Ansprüche, wobei das Rauschsignal ein analoges Rauschsignal ist, das in dem Schritt (107) des Erzeugens des Zufallssignals quantisiert wird, um das digitale Rauschsignal zu erhalten.

5. Verfahren (200) nach einem der vorstehenden Ansprüche, wobei das Zufallssignal als Eingangssignal einem Zufallszahlengenerator zugeführt wird, um den kryptographischen Schlüssel zu erzeugen.

6. Zufallssignalgenerator (300) zum Erzeugen eines kryptographischen Schlüssels unter Verwendung einer Physikalisch Unklonbaren Funktion (301), welche ausgebildet ist, ansprechend auf ein bestimmtes Stimulationssignal mit einem Antwortsignal zu reagieren, das ein Nutzsignal umfasst, wobei die Physikalisch Unklonbare Funktion durch herstellungsbedingte Materialinhomogenitäten gebildet ist und ausgebildet ist, bei Beaufschlagung mit einem Stimulationssignal in Form von elektromagnetischer Strahlung das Antwortsignal zu erzeugen, mit:
einem Sender (303) zum Beaufschlagen der Physikalisch Unklonbaren Funktion (301) mit dem bestimmten Stimulationssignal;
einem Detektor (305) zum Detektieren des Antwortsignals von der Physikalisch Unklonbaren Funktion (301), wobei das Antwortsignal ein Rauschsignal sowie das Nutzsignal umfasst; und
einem Prozessor (307), welcher ausgebildet ist, das Rauschsignal aus dem Antwortsignal zu extrahieren und das Zufallssignal auf der Basis des Rauschsignals zu erzeugen,
wobei der Prozessor ausgebildet ist, beim Extrahieren des Rauschsignals aus dem Antwortsignal das Nutzsignal zu bestimmen,
wobei der Prozessor ausgebildet ist, das so bestimmte Nutzsignal in dem Antwortsignal zu unterdrücken oder aus dem Antwortsignal herauszufiltern, um das Rauschsignal zu extrahieren,
wobei der Prozessor ferner ausgebildet ist, das Nutzsignal einer Fehlerkorrektur zu unterziehen,
wobei der Prozessor ausgebildet ist, das Zufallssignal durch eine Filterung oder eine Transformation oder eine De-Korrelation des Rauschsignals zu erzeugen, um Schwankungen eines Leistungsdichtespektrums des Rauschsignals zu reduzieren oder Abtastwerte des Rauschsignals zu de-korrelieren,
wobei das Rauschsignal ein digitales Rauschsignal ist, welches das Zufallssignal darstellt; oder
wobei das Rauschsignal in dem Schritt (107) des Erzeugens des Zufallssignals binarisiert wird, um ein binäres Rauschsignal zu erhalten, welches das Zufallssignal repräsentiert,
wobei der Prozessor ausgebildet ist, den kryptographischen Schlüssel auf der Basis des Zufallssignals zu erzeugen.

7. Zufallssignalgenerator (300) nach Anspruch 6, wobei die Physikalisch Unklonbare Funktion (301) Teil des Zufallssignalgenerators (300) ist.

8. Sicherheits- oder Wertdokument mit einem Zufallssignalgenerator nach Anspruch 6 oder 7.

## Claims

1. A method (200) for generating a cryptographic key using a physically unclonable function, comprising:
generating a random signal using a physically unclonable function, which is configured to react in response to a certain stimulation signal with a response signal which comprises a desired signal, wherein the physically unclonable function is formed by production-related material inhomogeneities and is configured to generate the response signal when a stimulation signal is applied in form of electromagnetic radiation, the method (200) comprising:
applying (101) the physically unclonable function with the certain stimulation signal;
detecting (103) the response signal from the physically unclonable function, wherein the response signal comprises a noise signal and the desired signal;
extracting (105) the noise signal from the response signal;
generating (107) the random signal on the basis of the noise signal,
wherein the random signal is generated by filtering or transforming or a de-correlating the noise signal in order to reduce variability in a power density spectrum of the noise signal or de-correlate sampled values of the noise signal,
wherein the extracting (105) of the noise signal from the response signal comprises the determination of the desired signal,
wherein the determined desired signal is suppressed in the response signal or filtered out of the response signal in order to extract the noise signal,
wherein the method (100) further comprises an error correction in the desired signal,
wherein the noise signal is a digital noise signal representing the random signal; or
wherein the noise signal is binarized in the step (107) of generating the random signal in order to obtain a binary noise signal which represents the random signal; and
generating (209) the cryptographic key on the basis of the random signal.

2. The method (200) according to claim 1, further comprising authenticating the random signal by the extracted desired signal.

3. The method (200) according to one of the preceding claims, wherein the random signal represents a random number or a sequence of random numbers.

4. The method (200) according to one of the preceding claims, wherein the noise signal is an analog noise signal which is quantized in the step (107) of generating the random signal in order to obtain the digital noise signal.

5. The method (200) according to one of the preceding claims, wherein the random signal is fed as an input signal to a random number generator in order to generate the cryptographic key.

6. A random signal generator (300) for generating a cryptographic key using a physically unclonable function (301), which is configured to react in response to a certain stimulation signal with a response signal which comprises a desired signal, wherein the physically unclonable function is formed by production-related material inhomogeneities and is configured to generate the response signal when a stimulation signal is applied in form of electromagnetic radiation, the random signal generator (300) comprising:
a transmitter (303) for applying the physical unclonable function (301) with the certain stimulation signal;
a detector (305) for detecting the response signal from the physically unclonable function (301), wherein the response signal comprises a noise signal and the desired signal; and
a processor (307) which is configured to extract the noise signal from the response signal and to generate the random signal on the basis of the noise signal,
wherein the processor is configured to determine the desired signal when extracting the noise signal from the response signal,
wherein the processor is configured to suppress the desired signal determined in this way in the response signal or to filter out the desired signal from the response signal in order to extract the noise signal,
wherein the processor is further configured to apply an error correction to the desired signal,
wherein the processor is configured to generate the random signal by filtering or transforming or de-correlating the noise signal in order to reduce variability in a power density spectrum of the noise signal or to de-correlate sampled values of the noise signal,
wherein the noise signal is a digital noise signal representing the random signal; or
wherein the noise signal is binarized in the step (107) of generating the random signal in order to obtain a binary noise signal which represents the random signal,
wherein the processor is configured to generate the cryptographic key on the basis of the random signal.

7. The random signal generator (300) according to claim 6, wherein the physically unclonable function (301) is part of the random signal generator (300).

8. A security or value document comprising a random signal generator according to claim 6 or 7.

## Revendications

1. Procédé (200) pour générer une clé cryptographique en utilisant une fonction non clonable physiquement, comprenant :
génération d'un signal aléatoire en utilisant une fonction non clonable physiquement, laquelle est configurée pour, en réaction à un signal de stimulation déterminée, réagir avec un signal de réponse qui comprend un signal utile, la fonction non clonable physiquement étant formée par des inhomogénéités de matériau liées à la fabrication et étant configurée pour générer le signal de réponse lors d'une sollicitation avec un signal de stimulation sous la forme d'un rayonnement électromagnétique, comprenant :
sollicitation (101) de la fonction non clonable physiquement avec le signal de stimulation déterminé ;
détection (103) du signal de réponse de la fonction non clonable physiquement, le signal de réponse comprenant un signal de bruit ainsi que le signal utile ;
extraction (105) du signal de bruit du signal de réponse ;
génération (107) du signal aléatoire sur la base du signal de bruit,
le signal aléatoire étant généré par un filtrage ou une transformation ou une décorrélation du signal de bruit, afin de réduire les fluctuations d'un spectre de densité de puissance du signal de bruit ou décorréler des valeurs d'échantillonnage du signal de bruit,
l'extraction (105) du signal de bruit du signal de réponse comprenant la détermination du signal utile,
le signal utile déterminé étant inhibé dans le signal de réponse ou étant éliminé par filtrage du signal de réponse afin d'extraire le signal de bruit,
le procédé (100) comprenant en outre une correction d'erreur dans le signal utile,
le signal de bruit étant un signal de bruit numérique qui représente le signal aléatoire ; ou
le signal de bruit étant binarisé dans l'étape (107) de génération du signal aléatoire afin d'obtenir un signal de bruit binaire qui représente le signal aléatoire ; et
génération (209) de la clé cryptographique sur la base du signal aléatoire.

2. Procédé (200) selon la revendication 1, qui comprend en outre l'authentification du signal aléatoire par le signal utile extrait.

3. Procédé (200) selon l'une des revendications précédentes, le signal aléatoire représentant un nombre aléatoire ou une séquence de nombres aléatoires.

4. Procédé (200) selon l'une des revendications précédentes, le signal de bruit étant un signal de bruit analogique qui est quantifié dans l'étape (107) de génération du signal aléatoire afin d'obtenir le signal de bruit numérique.

5. Procédé (200) selon l'une des revendications précédentes, le signal aléatoire étant acheminé en tant que signal d'entrée à un générateur de nombres aléatoires en vue de générer la clé cryptographique.

6. Générateur de signal aléatoire (300) pour générer une clé cryptographique en utilisant une fonction non clonable physiquement (301), laquelle est configurée pour, en réaction à un signal de stimulation déterminée, réagir avec un signal de réponse qui comprend un signal utile, la fonction non clonable physiquement étant formée par des inhomogénéités de matériau liées à la fabrication et étant configurée pour générer le signal de réponse lors d'une sollicitation avec un signal de stimulation sous la forme d'un rayonnement électromagnétique, comprenant :
un émetteur (303) destiné à solliciter la fonction non clonable physiquement (301) avec le signal de stimulation déterminé ;
un détecteur (305) destiné à détecter le signal de réponse de la fonction non clonable physiquement (301), le signal de réponse comprenant un signal de bruit ainsi que le signal utile ; et
un processeur (307), qui est configuré pour extraire le signal de bruit du signal de réponse et générer le signal aléatoire sur la base du signal de bruit,
le processeur étant configuré pour déterminer le signal utile lors de l'extraction du signal de bruit du signal de réponse,
le processeur étant configuré pour inhiber le signal utile ainsi déterminé dans le signal de réponse ou pour l'éliminer par filtrage du signal de réponse afin d'extraire le signal de bruit,
le processeur étant en outre configuré pour soumettre le signal utile à une correction d'erreur,
le processeur étant configuré pour générer le signal aléatoire par un filtrage ou une transformation ou une décorrélation du signal de bruit, afin de réduire les fluctuations d'un spectre de densité de puissance du signal de bruit ou décorréler des valeurs d'échantillonnage du signal de bruit,
le signal de bruit étant un signal de bruit numérique qui représente le signal aléatoire ; ou
le signal de bruit étant binarisé dans l'étape (107) de génération du signal aléatoire afin d'obtenir un signal de bruit binaire qui représente le signal aléatoire,
le processeur étant configuré pour générer la clé cryptographique sur la base du signal aléatoire.

7. Générateur de signal aléatoire (300) selon la revendication 6, la fonction non clonable physiquement (301) faisant partie du générateur de signal aléatoire (300) .

8. Document de sécurité ou de valeur comprenant un générateur de signal aléatoire selon la revendication 6 ou 7.
